Europäisches Patentamt

European Patent Office

Office européen des brevets

(19)

(11) Veröffentlichungsnummer: **0 213 529**
**B1**

(12) # EUROPÄISCHE PATENTSCHRIFT

(45) Veröffentlichungstag der Patentschrift: **24.10.90**

(51) Int. Cl.⁵: **B 23 P 11/02**, B 23 P 17/00

(21) Anmeldenummer: **86111396.7**

(22) Anmeldetag: **18.08.86**

(54) Verfahren zum Befestigen von Antriebselementen auf einer Hohlwelle.

(30) Priorität: **27.08.85 DE 3530600**

(43) Veröffentlichungstag der Anmeldung:
**11.03.87 Patentblatt 87/11**

(45) Bekanntmachung des Hinweises auf die
Patenterteilung:
**24.10.90 Patentblatt 90/43**

(84) Benannte Vertragsstaaten:
**AT BE CH DE FR GB IT LI LU NL SE**

(56) Entgegenhaltungen:
**DE-A-2 922 509**
**FR-A-2 531 883**
**GB-A- 853 630**
**GB-A-1 117 816**
**US-A-4 293 995**
**US-A-4 368 571**
**US-A-4 420 867**

(73) Patentinhaber: **Emitec Gesellschaft für**
**Emissionstechnologie mbH**
**Hauptstrasse 150**
**D-5204 Lohmar 1 (DE)**

(72) Erfinder: **Maus, Wolfgang, Dipl.-Ing.**
**Gut Horst**
**D-5060 Bergisch Gladbach (DE)**
Erfinder: **Swars, Helmut, Dipl.-Ing.**
**Riedweg 11**
**D-5060 Bergisch Gladbach (DE)**

(74) Vertreter: **Fuchs, Franz-Josef, Dr.-Ing. et al**
**Postfach 22 13 17**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 213 529 B1

**Beschreibung**

Die vorliegende Erfindung betrifft ein Verfahren nach dem Oberbegriff des 1. Anspruchs. Sie wird im folgenden am Beispiel einer Nockenwelle für Viertakt-Verbrennungskraftmaschinen näher beschrieben, ist jedoch in gleicher Weise auf andere Antriebselemente, wie Zahnräder, Lagerschalen und dergleichen anwendbar, die unverdrehbar und axial unverschiebbar auf einer glatten Welle befestigt werden sollen. Aus der DE—A—23 36 241 sind zahlreiche Möglichkeiten der Befestigung bekannt, die jedoch für eine Anwendung in der Großserienfertigung noch zu aufwendig erscheinen. Aus der GB—A—1 117 816 ist ein Verfahren zum Befestigen von Nocken auf einer Hohlwelle bekannt, bei der die Nocken entsprechend ihrer gewünschten Lage und Orientierung im Raum fixiert werden, wonach ein als Welle dienendes Rohr durch ihre Öffnungen hindurchgeschoben wird; durch das Hindurchziehen eines Übermaß aufweisenden Dornes durch das Rohr wird dieses auf seiner gesamten Länge aufgeweitet und in zu diesem Zweck an der Innenseite der Bohrungen der Nocken angebrachte Kerben gedrückt, wodurch ein Formschluß zwischen den Teilen hergestellt wird. Ein derartiger Formschluß ist kaum in der Lage, den auf Nockenwellen im Betrieb üblicherweise einwirkenden Drehmomenten zu widerstehen. Ein hier unter Umständen ebenfalls ins Auge gefaßtes hydraulisches Aufweiten des Rohres über seine gesamte Länge würde, wenn eine ausreichende plastische Verformung desselben erreicht werden soll, wahrscheinlich zum Aufreißen desselben dort führen, wo das Widerlager der Nocken fehlt. Ebenfalls einen Formschluß liefert das Verfahren nach der US—A—4 293 995, bei dem zusätzlich in ein Gesenk aufgeweitet werden muß und eine konzentrische Lage der Nocken zur Wellenachse nicht gegeben ist.

Hydraulische Vorrichtungen, mit denen das Ende jeweils eines Rohres durch Aufweiten in einem Rohrboden befestigt werden kann, sind aus dem Wärmetauscherbau bekannt (vergleiche US—A—4 420 867); eine getrennt für jedes einzelne Antriebselement erfolgende Befestigung auf der Welle führt nicht zu Produkten, die den bereits bekannten gegenüber wirtschaftliche Vorteile aufwiesen.

Diesem Stand der Technik gegenüber besteht die Aufgabe der vorliegenden Erfindung darin, ein Verfahren anzugeben, bei dem mit einer Mindestzahl von Arbeitsgängen eine Vielzahl von Antriebselementen gleichzeitig auf einer Welle befestigt werden können. Dabei sollen statt teurer Drehteile für die Welle billiger herzustellende Präzisionsrohre Verwendung finden und für die Antriebselemente selbst etwa notwendige Bearbeitungs- und Vergütungsgänge vor dem eigentlichen Zusammenbau erfolgen.

Die Lösung dieser Aufgabe erfolgt durch die im kennzeichnenden Teil des 1. Anspruchs angegebenen Verfahrensschritte. Das vorgeschlagene Verfahren paßt sich auch gut der auch aus anderen Gründen anzustrebenden Materialpaarung einer aus einem verhältnismäßig zähen, leicht verformbaren Werkstoff bestehenden Welle und den aus hochwertigerem, meist gehärtetem Werkstoff bestehenden Antriebselementen an. Die hydraulische Aufweitvorrichtung kann unschwer an die Anzahl der in einem Arbeitsgang auf der Welle zu befestigenden Antriebselemente sowie an deren möglicherweise ungleichmäßige Abstände angepaßt werden.

Gemäß der im 2. Anspruch vorgeschlagenen Ausgestaltung der Erfindung erscheint es vorteilhaft, die gesamte Berührungsfläche zwischen den Antriebselementen und den dazugehörigen Abschnitten der Welle für die Herstellung der kraftschlüssigen Verbindung auszunutzen.

Ein Ausführungsbeispiel der Erfindung ist in der Zeichnung dargestellt, und zwar zeigt diese eine Nockenwelle für eine vierzylindrige Verbrennungskraftmaschine, wie sie z.B. in Kraftfahrzeugen Verwendung findet, und zwar zeigt

Fig. 1 diese im Längsaxialschnitt entsprechend der Linie I—I der

Fig. 2, und

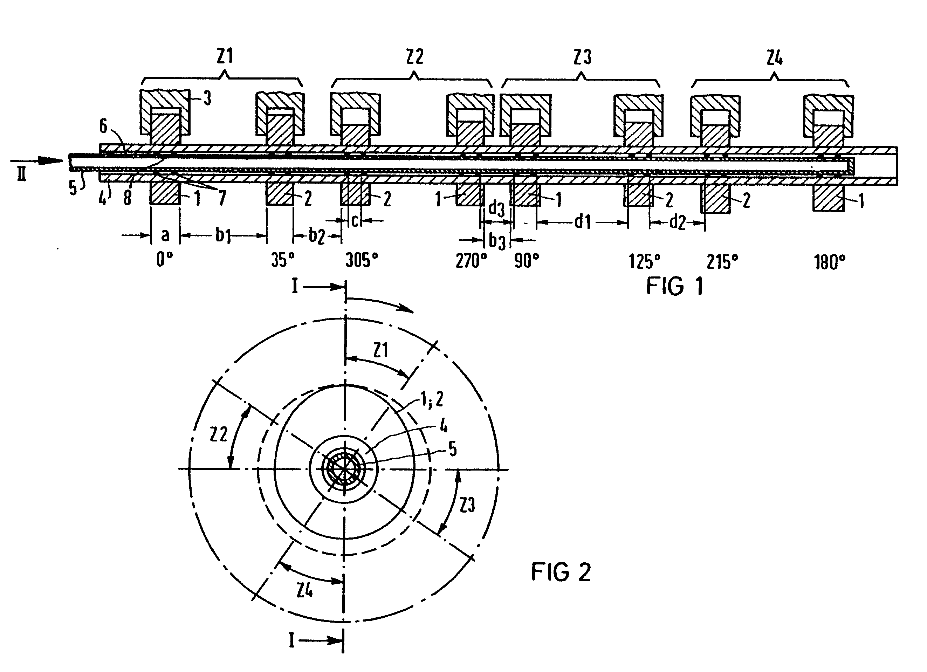

Fig. 2 dieselbe in der Ansicht entsprechend dem Pfeil II der Fig. 1.

Es sind je Zylinder Z 1 bis Z 4 Nocken 1, die die Einlaßventile steuern, und weitere Nocken 2 vorhanden, die die Auslaßventile steuern. Diese werden von einer entsprechenden Anzahl z.B. zangenförmiger Haltevorrichtungen 3 in der jeweils erforderlichen azimutalen Ausrichtung, im richtigen axialen Abstand und mit ihren Achsen fluchtend festgehalten. Die Nocken 1 und 2 sind fertig bearbeitet, d.h. geschliffen und gehärtet. Die Antriebselemente weisen eine nicht notwendigerweise wie hier dargestellt gleichmäßige Dicke auf und sind in gegebenenfalls wechselnden Abständen $b_1$, $b_2$, $b_3$, voneinander angeordnet. In den Bohrungen der Nocken 1, 2 wird mit geringem Untermaß eine Hohlwelle 4 aus einem verhältnismäßig zähen Stahl geschoben. Zusammen mit dieser oder in einem zweiten Arbeitsgang wird in letztere eine hydraulische Aufweitvorrichtung 5 geschoben, die neben den hier nicht dargestellten, konventionellen Einrichtungen zur Erzeugung des Drucks aus einem Rohr 6 besteht, auf dem in wechselnden, den Abständen der Antriebselemente voneinander entsprechenden Abständen $d_1$, $d_2$, $d_3$ Wirkabschnitte von der Breite c eingerichtet sind, die wie hier dargestellt schmaler als die Breite a sein können, vorzugsweise jedoch von der gleichen Breite sind. In letzterem Falle sind dann selbstverständlich die Abstände $b_1$, $b_2$ und $b_3$ gleich denjenigen $d_1$, $d_2$ und $d_3$. die Wirkabschnitte werden durch paarweise in Nuten an der Oberfläche des Rohres 6 eingelegte elastische Ringe 7 gebildet, zwischen denen im Rohr 6 jeweils mindestens eine Bohrung 8 angebracht ist, durch die das Hydraulikfluid in den Zwischenraum zwischen die Elemente 7 austreten kann. Letztere sind so ausgestaltet, daß sie im entlasteten Zustand ein geringes Untermaß gegenüber dem Innendurchmesser des Rohres 4 aufweisen, sich unter Druckaufgabe jedoch an dessen Innenwandung anlegen und einen Austritt des Hydraulikfluids aus dem Wirkabschnitt weitgehend verhindern. Der Druck des Hydraulikfluids wird so bemessen, daß er ausreicht, um im Bereich der Wirkabschnitte das rohr 4 durch Überschreiten der Elastizitätsgrenze aufzuweiten. Nachdem dieser Vorgang in allen Wirkabschnitten und damit für alle Antriebselemente gleichzeitig abgeschlossen ist, wird die Vorrichtung 5 wieder drucklos gemacht und aus dem Rohr 4 herausgezogen. Die Haltevorrichtungen 3 können dann geöffnet werden und die fertige Nockenwelle der weiteren Verarbeitung zugeführt werden. Die Fig. 2 zeigt die den einzelnen Zylindern Z1 und Z4 zugeordneten Sektoren, in denen die zu ihnen gehörigen Ventile angesteuert werden müssen und die demgemäß die Orientierung der Nokken bestimmen.

**Patentansprüche**

1. Verfahren zum Befestigen von n Antriebselementen (1, 2) auf einer Hohlwelle (4), gekennzeichnet durch folgende Schritte:
a) Die Antriebselemente (1, 2) von der Dicke a werden in an sich bekannter Weise auf die Welle (4) geschoben und mittels Haltewerkzeugen (3) im Abstand b zueinander in der jeweils azimutal einzunehmenden Position festgehalten,
b) In die Hohlwelle (4) wird hierzu korrespondierend

$$[n \times a + (n-1) \times b = n \times c + (n-1) \times d]$$

eine hydraulische Aufweitvorrichtung (5) geschoben, die im Abstand d angeordnete, von Dichtlippen (7) begrenzte Wirkabschnitte der Länge c aufweist,
c) In den Wirkabschnitten wird auf die Hohlwelle (4) ein Druck aufgebracht, der deren Werkstoff über die Elastizitätsgrenze hinweg radial beansprucht.
2. Verfahren nach Anspruch 1, dadurch gekennzeichnet, daß die Länge der Abschnitte a und c bzw. b und d einander gleich ist.

**Revendications**

1. Procédé de fixation de n éléments de commande ou d'entraînement (1, 2) sur un arbre creux (4), caractérisé par les stades suivants:

a) les éléments de commande ou d'entraînement (1, 2) d'épaisseur a sont enfilés, d'une manière en soi connue, sur l'arbre (4) et sont maintenus au moyen d'éléments de maintien (3), à un intervalle b les uns des autres, en la position azimutale qu'ils doivent assumer,
b) dans l'arbre creux (4) est enfilé, suivant la correspondance

$$[n \times a + (n-1) \times b = n \times c + (n-1) \times d],$$

un dispositif hydraulique d'élargissement (5), qui comporte des sections actives de longueur c disposées à l'intervalle d et délimitées par des lèvres d'étanchéité (7),
c) dans les sections actives, on exerce sur l'arbre creux (4) une pression qui en sollicite radialement le matériau au-delà de la limite d'élasticité.
2. Procédé suivant la revendication 1, caractérisé en ce que les longueurs des sections a et c, d'une part, et b et d, d'autre part, sont égales.

**Claims**

1. Method for fastening n drive elements (1, 2) on a hollow shaft (4), characterised by the following steps:
a) the drive elements (1, 2) with a thickness a are pushed in a manner known per se on to the shaft (4) and are retained in the azimuthal position to be occupied in each case, at a distance b from each other, by means of holding tools (3).
b) A hydraulic expanding device (5) is pushed into the hollow shaft (4), corresponding hereto

$$[n \times a + (n-1) \times b = n \times c + (n-1) \times d],$$

which expanding device (5) has active sections with the length c which are arranged with the separating distance d and are bounded by sealing lips (7).
c) In the active sections, a pressure is applied to the hollow shaft (4), which pressure stresses the material of these active sections radially beyond the elastic limit.
2. Method according to claim 1, characterised in that the lengths of the sections a and c, or b and d, are equal to each other.

FIG 1

FIG 2

EP 0 213 529 B1